# EUROPÄISCHE PATENTSCHRIFT

(11) **EP 4 330 563 B1**
(45) Veröffentlichungstag und Bekanntmachung des Hinweises auf die Patenterteilung: **12.03.2025**
(21) Anmeldenummer: 22714765.9
(22) Anmeldetag: 21.03.2022
(51) Int. Cl.: F16F 15/129

(54) **REIBEINRICHTUNG MIT EINER DREHACHSE FÜR EINEN TORSIONSSCHWINGUNGSDÄMPFER**
FRICTION DEVICE WITH A ROTATIONAL AXIS FOR A TORSIONAL VIBRATION DAMPER
DISPOSITIF DE FROTTEMENT DOTÉ D'UN AXE DE ROTATION DESTINÉ À UN AMORTISSEUR DE VIBRATIONS DE TORSION

(30) Priorität: 27.04.2021 DE 102021110696
(43) Veröffentlichungstag der Anmeldung: 06.03.2024
(73) Patentinhaber: Schaeffler Technologies AG & Co. KG, 91074 Herzogenaurach (DE)
(72) Erfinder: HÄSSLER, Martin, 76676 Graben-Neudorf (DE); GMEINER, Timm, 76185 Karlsruhe (DE); KESSLER, Michael, 77815 Bühl (DE); RUSCH, Alain, 67760 Gambsheim (FR)
(86) Internationale Anmeldenummer: PCT/DE2022/100214
(87) Internationale Veröffentlichungsnummer: WO 2022/228602

(56) Entgegenhaltungen:
- WO-A1-2021/170171
- DE-A1- 102016 221 550
- DE-B3- 102021 110 696
- DE-U1- 202022 101 455
- US-A- 4 697 682
- US-A- 4 993 530

## Beschreibung

Die Erfindung betrifft eine Reibeinrichtung mit einer Drehachse für einen Torsionsschwingungsdämpfer, aufweisend zumindest die folgenden Komponenten:
- eine Eingangsseite mit einer ersten Eingangsscheibe und mit einer zweiten Eingangsscheibe, und
- eine Ausgangsseite mit einem Energiespeicherelement, einer ersten Reibscheibe und einer zweiten Reibscheibe,

wobei eine Axialkraft des Energiespeicherelements geleitet ist über:
   - jeweils zumindest einen der Kontaktbereiche von dem Energiespeicherelement auf die Reibscheiben, sowie
   - jeweils zumindest eine der Reibzonen von den Reibscheiben auf die jeweils korrespondierende Eingangsscheibe,
wobei ein erster der Kontaktbereiche und eine erste der Reibzonen auf jeweils einem ersten Durchmesser, sowie ein zweiter der Kontaktbereiche und eine zweite der Reibzonen auf jeweils einem zweiten zu dem jeweiligen ersten Durchmesser ungleichen Durchmesser angeordnet sind. Die Reibeinrichtung ist vor allem dadurch gekennzeichnet, dass ein erster axialer Abstand zwischen dem ersten Kontaktbereich und der ersten Reibzone ungleich einem zweiten axialen Abstand zwischen dem zweiten Kontaktbereich und der zweiten Reibzone ist. Die Erfindung betrifft weiterhin einen Torsionsschwingungsdämpfer für einen Antriebsstrang, einen Antriebsstrang mit einem solchen Torsionsschwingungsdämpfer, sowie ein Kraftfahrzeug mit einem solchen Antriebsstrang.

Reibeinrichtungen werden in Torsionsschwingungsdämpfern eingesetzt, um eine Relativverdrehung um eine Drehachse zwischen einer Eingangsseite und einer Ausgangsseite gezielt mit einem Reibmoment zu beaufschlagen, um so dem schwingenden System passend Energie zu entziehen und es dadurch zu dämpfen.

Torsionsschwingungsdämpfer werden beispielsweise zur Reduktion von Torsionsschwingungen in einem Antriebsstrang eingesetzt.

Torsionsschwingungsdämpfer sind in einem mit periodischen Störungen angeregten Antriebsstrang gezielt eingebrachte Torsionsnachgiebigkeiten. Ziel hierbei ist, die in verschiedenen Betriebssituationen auftretenden störenden Schwingungsresonanzen in einen Drehzahlbereich möglichst unterhalb der Betriebsdrehzahlen zu verschieben. Im Betriebsdrehzahlbereich verbleibende Schwingungsresonanzen werden über eine externe oder integrierte Reibeinrichtung gedämpft, deren Reibmoment in definierten Grenzen zu liegen hat. Die Reibeinrichtung ist unabhängig von der Torsionsnachgiebigkeit ausführbar.

Es ist bekannt, als Reibeinrichtung ein axial wirkendes Energiespeicherelement einzusetzen (beispielsweise eine Wellscheibe oder eine Tellerfeder), das zusammen mit einer passenden Reibscheibe (und gegebenenfalls einer Stützscheibe) axial zwischen Bauteilen angeordnet ist, die mit der Eingangsseite beziehungsweise Ausgangsseite verbunden sind. Die Axialkraft des Energiespeichers in Einbaulage, der Reibradius des Reibelements und der Reibwert der Materialpaarung definieren ein Reibmoment, das über die Relativverdrehung um die Drehachse im Wesentlichen konstant ist. Für verschiedene Betriebspunkte (beziehungsweise eingesetzt in einem Kraftfahrzeug verschiedene Fahrzustände), welche unterschiedliche Reibmomentniveaus benötigen, werden entsprechend mehrere, auf unterschiedliche Reibmomente ausgelegte Reibeinrichtungen vorgesehen, welche ihre Relativverdrehung um die Drehachse jeweils im zugehörigen Verdrehwinkelbereich des Torsionsschwingungsdämpfers erfahren.

Steht für eine Reibeinrichtung nur ein eingeschränkter radialer Einbauraum zur Verfügung, lassen sich allein durch Variation des Reibradius zwischen ein und denselben Reibpartnern nur begrenzt unterschiedliche Reibmomentniveaus für das resultierende Reibmoment einstellen. Aufgrund von der Forderung nach geringen Durchmessern der Komponenten für einen Antriebsstrang, sowie dem Kostendruck ist der sehr kurze nutzbare Wegbereich des Energiespeicherelements in Bezug auf Fertigungstoleranzen und Montagetoleranzen, sowie einer geforderten Konstanz über die angestrebte Lebensdauer unter Umständen kritisch. Gleichwohl ist eine axiale Verlängerung einer Reibeinrichtung oder gar des Torsionsschwingungsdämpfers oftmals keine Option.

Die Dokumente US4993530A und US4697682A offenbaren bekannte Reibeinrichtungen.

Hiervon ausgehend liegt der vorliegenden Erfindung die Aufgabe zugrunde, die aus dem Stand der Technik bekannten Nachteile zumindest teilweise zu überwinden. Die erfindungsgemäßen Merkmale ergeben sich aus den unabhängigen Ansprüchen, zu denen vorteilhafte Ausgestaltungen in den abhängigen Ansprüchen aufgezeigt werden. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, welche ergänzende Ausgestaltungen der Erfindung umfassen.

Die Erfindung betrifft eine Reibeinrichtung mit einer Drehachse für einen Torsionsschwingungsdämpfer, aufweisend zumindest die folgenden Komponenten:
- eine Eingangsseite mit einer ersten Eingangsscheibe und mit einer zweiten Eingangsscheibe, welche miteinander verbunden sind; und
- eine Ausgangsseite mit einem Energiespeicherelement, einer ersten Reibscheibe und einer zweiten Reibscheibe, wobei das Energiespeicherelement axial zwischen den Reibscheiben angeordnet ist, wobei die Reibscheiben energiespeicherelementseitig eine Mehrzahl von Kontaktbereichen und eingangsscheibenseitig eine Mehrzahl von Reibzonen aufweisen,

wobei zwischen der Eingangsseite und der Ausgangsseite ein Drehmoment reibschlüssig übertragbar ist, indem das Energiespeicherelement zum Ausüben einer Axialkraft vorgespannt ist und diese Axialkraft geleitet ist über:
   - jeweils zumindest einen der Kontaktbereiche von dem Energiespeicherelement auf die jeweilige Reibscheibe, sowie
   - jeweils zumindest eine der Reibzonen von den Reibscheiben auf die jeweils korrespondierende Eingangsscheibe,
wobei zwischen der Ausgangsseite und der Eingangsseite infolge eines Drehmomentgefälles ein relativer Verdrehwinkel um die Drehachse bewirkbar ist, und
von dem anliegenden Verdrehwinkel abhängig ist:
   - ein Betrag einer Axialkraft, und
   - der Kontaktbereich und/oder die Reibzone, über welche die Axialkraft geleitet ist, wobei ein erster der Kontaktbereiche und eine erste der Reibzonen auf jeweils einem ersten Durchmesser, sowie ein zweiter der Kontaktbereiche und eine zweite der Reibzonen auf jeweils einem zweiten Durchmesser angeordnet sind, wobei zumindest einer der ersten Durchmesser ungleich dem jeweils gleichseitigen zweiten Durchmesser ist.

Die Reibeinrichtung ist vor allem dadurch gekennzeichnet, dass ein erster axialer Abstand zwischen dem ersten Kontaktbereich und der ersten Reibzone ungleich einem zweiten axialen Abstand zwischen dem zweiten Kontaktbereich und der zweiten Reibzone ist.

Es wird im Folgenden auf die genannte Drehachse Bezug genommen, wenn ohne explizit anderen Hinweis die axiale Richtung, radiale Richtung oder die Umlaufrichtung und entsprechende Begriffe verwendet werden. In der vorhergehenden und nachfolgenden Beschreibung verwendete Ordinalzahlen dienen, sofern nicht explizit auf das Gegenteilige hingewiesen wird, lediglich der eindeutigen Unterscheidbarkeit und geben keine Reihenfolge oder Rangfolge der bezeichneten Komponenten wieder. Eine Ordinalzahl größer eins bedingt nicht, dass zwangsläufig eine weitere derartige Komponente vorhanden sein muss.

Die hier vorgeschlagene Reibeinrichtung ist wie eingangs erläutert zum Bewirken einer gezielten Torsionsnachgiebigkeit in einem Antriebsstrang eingerichtet, wobei zwischen einer Eingangsseite und einer Ausgangsseite ein definiertes Reibmoment mittels des vorgespannten Energiespeicherelements und der Reibscheiben erzeugt ist. Besonders ist hierbei, dass das Energiespeicherelement abhängig von einem relativen Verdrehwinkel zwischen der Eingangsseite und der Ausgangsseite unterschiedlich stark vorgespannt ist und somit, beispielsweise mit zunehmendem relativen Verdrehwinkel ein zunehmendes verändertes Reibmoment zwischen der Eingangsseite und der Ausgangsseite übertragbar ist. Das Grundprinzip dieser Reibeinrichtung entspricht in erster Näherung einer Rutschkupplung, wobei hier nicht ein Drehmomentgrenzwert eingestellt ist, ab welchem kein (zusätzliches) Überschussdrehmoment mehr übertragbar ist, sondern Verdrehwinkel-abhängig verschiedene (definierte) Drehmomente maximal übertragbar sind. Der Verdrehwinkel wiederum ist abhängig von einer Drehmomentquelle zwischen der Eingangsseite und der Ausgangsseite, wobei bevorzugt die Reibeinrichtung für beide Drehmomentrichtungen um die Drehachse eingerichtet ist (beispielsweise für ein Zugmoment und ein Schubmoment in einem Antriebsstrang eines Kraftfahrzeugs).

Es sei darauf hingewiesen, dass ein Drehmoment sowohl über die Eingangsseite als auch über die Ausgangsseite (gegen die jeweils träge Komponente (einleitbar und übertragbar ist). Beispielsweise im Einsatz in einem Kraftfahrzeug ist die Eingangsseite sowohl als Eingangsseite für ein Zugmoment als auch als Eingangsseite für ein Schubmoment einsetzbar. Das gilt folglich entsprechend umgekehrt für die Ausgangsseite. Das Energiespeicherelement ist zwischen einer ersten Reibscheibe und einer zweiten Reibscheibe angeordnet und mittelbar oder unmittelbar von den Reibscheiben vorgespannt. Dazu weist jede der Reibscheiben jeweils zumindest einen Kontaktbereich auf, über welchen die Reibscheibe mittelbar oder unmittelbar mit dem Energiespeicherelement in kraftübertragendem Kontakt steht. In einer bevorzugten Ausführungsform findet zwischen den Kontaktbereichen und dem Energiespeicherelement keine beziehungsweise nur eine vernachlässigbare relative Verdrehung statt. Damit wird Reibverschleiß an dem Energiespeicherelement sowie auch an den Kontaktbereichen der Reibscheibe ausgeschlossen beziehungsweise zumindest für eine angestrebte Lebensdauer ausreichend vernachlässigbar gering gehalten. Auf der anderen Seite, also von dem Energiespeicherelement aus gesehen axial-außen beziehungsweise eingangsscheibenseitig, weisen die Reibscheiben jeweils zumindest eine Reibzone auf, welche mit der jeweils korrespondierenden Eingangsscheibe in mittelbaren oder unmittelbaren Kontakt steht. In einer bevorzugten Ausführungsform findet allein zwischen den Reibzonen der Reibscheibe und der jeweils korrespondierenden Eingangsscheibe (mittelbar oder unmittelbar) eine relative Verdrehung, sowie eine Reibmomentübertragung statt. In einer bevorzugten Ausführungsform ist zumindest das Reibmoment zwischen den Reibzonen und der Eingangsscheibe das maßgebliche Reibmoment und weitere Reibmomente und/oder Nachgiebigkeiten sind entweder vernachlässigbar oder (nahezu) konstant über den relativen Verdrehwinkel.

In einem unbelasteten Zustand der Reibeinrichtung ist ein infolge der vorliegenden axialen Vorspannung des Energiespeicherelements ein vorbestimmtes erstes maximales Drehmoment von der Eingangsseite auf die Ausgangsseite und umgekehrt übertragbar. Liegt zwischen der Eingangsseite und der Ausgangsseite jedoch ein Drehmomentgefälle an, welches größer als das beschriebene maximale Drehmoment ist, so findet zwischen der Eingangsseite und der Ausgangsseite eine relative Verdrehung statt, welche in einem entsprechenden Verdrehwinkel um die Drehachse resultiert. Infolge von einer Rampenform der zumindest einen Reibzone und/oder zumindest einer der Eingangsscheiben wird der relative Verdrehwinkel in einen Axialhub umgewandelt, welcher sich wiederum als Axialhub des Energiespeicherelements auswirkt, sodass damit der Betrag der Axialkraft verändert wird.

Ein erster Kontaktbereich einer der Reibscheiben ist auf einem ersten Durchmesser angeordnet und eine zugehörige beziehungsweise resultierende erste Reibzone, welche bei einem ersten Verdrehwinkel aktiv sind, sind für die Übertragung der Axialkraft jeweils auf einem ersten Durchmesser angeordnet. Weiterhin sind ein zweiter Kontaktbereich und eine zugehörige beziehungsweise resultierende zweite Reibzone auf jeweils einem zweiten Durchmesser angeordnet. Es sei darauf hingewiesen, dass die ersten Durchmesser in einer Ausführungsform identisch oder voneinander abweichend sind, wobei bevorzugt der Kontaktbereich jeweils eine geringe Kontaktfläche aufweist, welche an einen Linienkontakt angenähert ist, welche den Energiespeicherelement-seitigen ersten Durchmesser definiert. Die radiale Ausdehnung der Reibzonen ist bevorzugt nicht auf einen reinen Linienkontakt, sondern auf einen möglichst großflächigen Kontakt ausgelegt, sodass der entsprechende Durchmesser bevorzugt der mittlere Durchmesser ist, welcher näherungsweise für die Berechnung des maximal übertragbaren Reibmoments zu Grunde gelegt ist. Hier ist weiterhin für einen zweiten Verdrehwinkel, welcher beispielsweise größer ist als der erste Verdrehwinkel, wobei der erste Verdrehwinkel beispielsweise die Null Lage ist, ein von dem ersten Kontaktbereich verschiedener zweiter Kontaktbereich und/oder eine zu dem zweiten Verdrehwinkel zugehörige zweite Reibzone vorgesehen, welche von der ersten Reibzone verschieden ist. Der erste Kontaktbereich und zweite Kontaktbereich und/oder die erste Reibzone und die zweite Reibzone sind jeweils durch ihren Durchmesser voneinander unterschiedlich. Es sei nochmals darauf hingewiesen, dass ein unterschiedlicher Durchmesser der zwei Kontaktbereiche zu einer unterschiedlichen Auflage an dem Energiespeicherelement führen (infolge der Verkippung) und die unterschiedlichen Durchmesser der Reibzonen zu einem unterschiedlichen Reibradius beziehungsweise Reibdurchmesser führen und somit unter der Annahme einer gleichen Axialkraft zu unterschiedlichen maximal übertragbaren Reibmomenten führen (näherungsweise proportional zu dem Durchmesser).

Hier ist nun vorgeschlagen, dass bei zumindest einer der Reibscheiben zwei unterschiedliche Abstände bei der Übertragung der Axialkraft abhängig von dem anliegenden Verdrehwinkel gebildet sind. Die unterschiedlichen Abstände haben also als Resultat, dass damit abhängig von dem anliegenden Verdrehwinkel zusätzlich eine unterschiedliche Vorspannung an dem Energiespeicherelement erzeugt wird, wobei dies in einer größeren wirksamen Axialkraft resultiert und/oder in einer größeren Deformation der Reibscheibe, wobei beispielsweise eine Vergrößerung mit der wirksamen Fläche der Reibzone erzielt wird. Beispielsweise wird damit erzielt, dass sich Reibzonen, welche auf unterschiedlichen Durchmessern angeordnet sind, miteinander überlappen. Es sei darauf hingewiesen, dass in einer Ausführungsform die erste Reibzone und die zweite Reibzone miteinander identisch sind. In einer anderen Ausführungsform sind der erste Kontaktbereich und der zweite Kontaktbereich miteinander identisch. Identische Kontaktbereiche beziehungsweise Reibzonen weisen einen identischen (wirksamen) Durchmesser auf. In einer bevorzugten Ausführungsform ist eine jeweilige Reibzone zu der korrespondierenden Gegenreibfläche der jeweiligen Eingangsscheibe in radialer Richtung geneigt ausgeführt, wobei der hier definierte axiale Abstand dann zwischen der höchsten Erhebung der Reibzone und dem Kontaktbereich der jeweiligen Reibscheibe definiert ist. Auch sei darauf hingewiesen, dass dieser axiale Abstand in einer entlasteten Lage beziehungsweise Form der Reibscheibe definiert ist und infolge der Krafteinleitung mit der jeweiligen Eingangsscheibe und dem Energiespeicherelement infolge der Deformation der Reibscheibe nicht oder Verdrehwinkel abhängig nicht vorliegt.

Es wird weiterhin in einer vorteilhaften Ausführungsform der Reibeinrichtung vorgeschlagen, dass die erste Reibzone und die zweite Reibzone in Umlaufrichtung und radialer Richtung rampenförmig ineinander übergehen.

Bei dieser Ausführungsform ist zusätzlich zu der Rampenübersetzung (in Umlaufrichtung) die resultierende Verkippung des Energiespeicherelements genutzt, um die Kraftübertragung von dem Energiespeicherelement (beispielsweise einer Tellerfeder) auf die Reibscheibe auf einen anderen Kontaktbereich zu übertragen und/oder die Krafteinleitung auf die Reibscheibe derart zu verändern, dass eine andere Reibzone auf einem anderen Durchmesser als bei einem geringeren Drehmomentgefälle zusätzlich oder alternativ für einen Reibschluss mit der Eingangsscheibe (mittelbar oder unmittelbar) in Kontakt gebracht ist. In einer Ausführungsform ist zwischen den verschiedenen Kontaktbereichen und/oder den verschiedenen Reibzonen ein sanfter also Rampen-artiger, Übergang gebildet, wobei dieser Rampen-artige Übergang also radial ausgerichtet ist im Gegensatz zu der Rampen-artigen Übersetzung für das axiale Vorspannen des Energiespeicherelements, welche in Umlaufrichtung ausgerichtet ist. Diese beiden Rampen sind also zueinander superponiert. Ein solcher sanfter Übergang hat Vorteile hinsichtlich der Bauteilbelastung und hinsichtlich einer (damit vermiedenen oder zumindest reduzierten) Geräuschinduktion.

Es wird weiterhin in einer vorteilhaften Ausführungsform der Reibeinrichtung vorgeschlagen, dass der erste Kontaktbereich und der zweite Kontaktbereich aus derjenigen dem Energiespeicherelement zugewandten Oberfläche der betreffenden Reibscheibe mit einer voneinander unterschiedlichen Höhe hervorstehen, wobei bevorzugt zumindest einer der Kontaktbereiche Kuppen-förmig gebildet ist.

Hier ist vorgeschlagen, dass die zwei Kontaktbereiche auf zwei unterschiedlichen Durchmessern mit einer voneinander unterschiedlichen Höhe hervorstehen. Damit ist erreicht, dass der axiale Abstand zwischen dem Energiespeicherelement und der Reibscheibe unterschiedlich ist und/oder die axiale Dicke der Reibscheibe im Bereich der unterschiedlichen Durchmesser der Kontaktbereiche unterschiedlich ist. In letzterem Falle bedeutet das, dass der Kontaktbereich mit der größeren Höhe bei einem Bereich der Reibscheibe gebildet ist, wo die Reibscheibe dünner ist als in dem Bereich, wo der andere Kontaktbereich mit der geringeren Höhe gebildet ist. In einer bevorzugten Ausführungsform ist sowohl die Reibscheibe bei dem höheren Kontaktbereich dünner als auch der höhere Kontaktbereich axial näher bei dem Energiespeicherelement angeordnet. In einer bevorzugten Ausführungsform ist der radial-innere Kontaktbereich mit der größeren Höhe ausgeführt.

In einer vorteilhaften Ausführungsform ist zumindest einer der Kontaktbereiche Kuppen-förmig gebildet, sodass auch trotz einer Verkippung des Energiespeicherelements über den nutzbaren Wegbereich zumindest annäherungsweise eine Kontaktlinie gebildet ist. In einer Ausführungsform sind die Kontaktbereiche als umlaufende geschlossene Ringe oder als einzelne Noppen gebildet, wobei bevorzugt ein jeweiliger Kontaktbereich auf einem definierten Durchmesser zur Drehachse angeordnet sind.

Es wird weiterhin in einer vorteilhaften Ausführungsform der Reibeinrichtung vorgeschlagen, dass die Eingangsscheiben eine derartige vorbestimmte axiale Gesamtnachgiebigkeit aufweisen, dass der nutzbare Wegbereich mittels der Gesamtnachgiebigkeit um den Faktor 1,5 bis 3 vergrößert ist.

Hier ist nun vorgeschlagen, dass die Eingangsscheiben eine vorbestimmte axiale Gesamtnachgiebigkeit aufweisen, wobei diese Gesamtnachgiebigkeit derart eingerichtet ist, dass der nutzbare Wegbereich mittels der Gesamtnachgiebigkeit um den Faktor 1,5 [anderthalb] bis 3 [drei] vergrößert ist. Der nutzbare Wegbereich des Energiespeicherelements, bevorzugt einer Tellerfeder, ist somit in der Folge dieser Reihenschaltung verlängert. Die Gesamtnachgiebigkeit ist eine Federkennlinie der Eingangsscheiben. Es sei dabei darauf hingewiesen, dass die Eingangsscheiben miteinander verbunden sind und die Verbindungen unter Umständen in die Gesamtnachgiebigkeit mit einspielen, wobei bevorzugt die Teilnachgiebigkeit der Verbindungen gegenüber der Nachgiebigkeit der Eingangsscheiben selbst gering bis vernachlässigbar ist, also im Vergleich sehr steif ausgeführt ist.

Die jeweilige Eingangsscheibe ist bevorzugt einstückig gebildet, sodass die Anzahl von Fügestellen, welche zu der Gesamtnachgiebigkeit beitragen, möglichst gering ist. In einem Weg-Kraft-Diagramm ist die Gesamtnachgiebigkeit (also die Federkennlinie) derart ausgeführt, dass sie in einer maximal steifen Ausführungsform der Gesamtnachgiebigkeit (also sehr steifen Eingangsscheiben) den nutzbaren Wegbereich des Energiespeicherelements um 50 % [fünfzig Prozent] (also zusätzlich) verlängert, sodass also der minimale nutzbare Wegbereich das Anderthalbfache des nutzbaren Wegbereichs des Energiespeicherelements beträgt. Bei einer maximal weichen Gesamtnachgiebigkeit (also zumindest einer sehr weichen Eingangsscheibe) verlängert sich der nutzbare Wegbereich des Energiespeicherelements (zusätzlich) um das Zweifache, sodass also der maximale nutzbare Wegbereich das Dreifache des nutzbaren Wegbereichs des Energiespeicherelements beträgt. In einer bevorzugten Ausführungsform ist die Gesamtnachgiebigkeit eine Gerade oder in dem abgefragten Wirkbereich (näherungsweise) eine Gerade. In der Superposition von der Gesamtnachgiebigkeit der Eingangsscheiben und der Federkennlinie des Energiespeicherelements ergibt sich also ein deutlich längerer nutzbarer Wegbereich zwischen der minimalen nutzbaren Kraft und der maximalen nutzbaren Kraft, welche von der Reibeinrichtung zum Erreichen eines entsprechenden reibschlüssig übertragbaren Drehmoments auslegungsgemäß abgefragt ist.

Es sei darauf hingewiesen, dass die Axialkraft aus der Kraft des Energiespeicherelements resultiert und näherungsweise Betrags-identisch und Richtungs-identisch sind.

Es sei darauf hingewiesen, dass die Definition der Gesamtnachgiebigkeit für den in der Reibeinrichtung vorliegenden Durchmesser beziehungsweise den mittleren Reibdurchmesser der Gesamtfläche der Reibzonen bezogen auf die Drehachse ist.

Es wird weiterhin in einer vorteilhaften Ausführungsform der Reibeinrichtung vorgeschlagen, dass das Verhältnis von der maximalen nutzbaren Kraft zu der minimalen nutzbaren Kraft größer 1,5 oder größer 2 ist.

Hier ist vorgeschlagen, dass das Energiespeicherelement derart betrieben wird, dass ihre maximale nutzbare Kraft dividiert durch die minimale nutzbare Kraft größer 1,5 [anderthalb] oder größer 2 [zwei] ist. Welche Ausführungsform vorteilhaft ist, hängt von der Einbausituation beziehungsweise von dem Pflichtenheft ab. Es sei darauf hingewiesen, dass in beiden Fällen ein Verhältnis der Gesamtkennlinie, welche sich aus der Reihenschaltung der Gesamtnachgiebigkeit und der Federkennlinie des Energiespeicherelements ergibt, zu der Federkennlinie wie oben angegeben 1,5 bis 3 beträgt, also nicht hiervon abhängig ausgelegt wird.

Bei einer Ausführungsform der Gesamtkennlinie mit einem Verhältnis der maximalen nutzbaren Kraft [Zähler] zu der minimalen nutzbaren Kraft [Nenner] von größer 1,5 [anderthalb] und kleiner gleich 2 [zwei] ist bevorzugt einzig der Wegbereich ausgehend von dem lokalen Minimum (rechts der Planlage des Energiespeicherelements) genutzt.

Bei der Ausführungsform der Gesamtkennlinie mit einem Verhältnis der maximalen nutzbaren Kraft [Zähler] zu der minimalen nutzbaren Kraft [Nenner] von größer 2 [zwei] ist bevorzugt der Wegbereich sowohl links als auch rechts der Planlage genutzt. In einer bevorzugten Ausführungsform ist die Planlage etwa oder exakt mittig zwischen der minimalen nutzbaren Kraft und der maximalen nutzbaren Kraft angeordnet.

Es wird weiterhin in einer vorteilhaften Ausführungsform der Reibeinrichtung vorgeschlagen, dass zumindest eine der Eingangsscheiben Sektorausbrüche und Radialstege zwischen den Sektorausbrüchen aufweist,
wobei von den Radialstegen die Gegenreibfläche für die Reibzonen der korrespondierenden Reibscheibe gebildet ist, und
wobei die Radialstege eine Stegnachgiebigkeit aufweisen, von welchen ein Hauptanteil einer vorbestimmten Gesamtnachgiebigkeit gebildet ist,
wobei bevorzugt die Stegnachgiebigkeit abhängig von dem wirksam anliegenden Durchmesser der korrespondierenden Reibzone veränderlich ist.

Hier ist nun vorgeschlagen, dass die Gesamtnachgiebigkeit maßgeblich dadurch erreicht wird, dass zumindest eine der Eingangsscheiben Sektorausbrüche aufweist und zwischen den Sektorausbrüchen stehenbleibende Radialstege aufweist, welche eine definierte Stegnachgiebigkeit aufweisen. Diese Stegnachgiebigkeit ist abhängig von der Länge des Stegs sowie von der Breite und der Dicke des Radialstegs. Weiterhin ist die Stegnachgiebigkeit von Rippen oder Bördelkanten abhängig. Es bestehen somit große Freiheiten bei der Einstellung der Stegnachgiebigkeit. In einer Ausführungsform ist die jeweils andere Eingangsscheibe ohne Sektorausbrüche also durchgehend gebildet, womit eine große Axialsteifigkeit im Vergleich zu der Eingangsscheibe mit den Sektorausbrüchen gebildet ist und/oder eine hohe Drehmomentsteifigkeit zwischen einem Innenumfang und einem Außenumfang im Vergleich zu der Eingangsscheibe mit den Sektorausbrüchen gebildet ist.

In einer vorteilhaften Ausführungsform ist die Stegnachgiebigkeit derart eingerichtet, dass sie über den wirksam anliegenden Durchmesser der korrespondierenden Reibzone der Reibscheibe veränderlich ist. Beispielsweise ist die Veränderung der Stegnachgiebigkeit korrespondierend zu der Veränderung der Nachgiebigkeit der Reibscheibe abhängig von einem Durchmesserversatz, wie oben beschrieben, angepasst, sodass eine Gesamtnachgiebigkeit der Eingangsscheiben zusammen mit der Nachgiebigkeit der betreffenden Reibscheibe eine (nahezu) gerade Federkennlinie ergeben. Dies ist vorteilhaft hinsichtlich der Beherrschbarkeit des Gesamtaufbaus, muss jedoch nicht vorteilhaft für den Betrieb einer solchen Reibeinrichtung sein.

Es wird weiterhin in einer vorteilhaften Ausführungsform der Reibeinrichtung vorgeschlagen, dass die Reibscheiben jeweils über in Umlaufrichtung wirksame Einhängungen der Reibscheiben drehmomentübertragend verbunden sind:
- mit einem separaten Anschlusselement, welches zum drehmomentübertragenden Verbinden mit der Ausgangsseite eingerichtet ist, und/oder
- miteinander.

Wie bereits oben beschrieben, ist bevorzugt eine Relativbewegung zwischen den Reibscheiben und dem Energiespeicherelement unterbunden beziehungsweise gering gehalten. Hier ist vorgeschlagen, dass eine Fixierung der Reibscheiben zueinander und somit eine Fixierung zu dem Energiespeicherelement über entsprechende Einhängungen mit einem separaten Anschlusselement, beispielsweise eine Welle beziehungsweise ein Nabenelement, gebildet ist und/oder die Reibscheiben über Einhängungen miteinander verbunden sind. Solche Einhängungen sind beispielsweise nach radial-innen oder radial-außen weisende Laschen, wobei bei Einhängungen zum Verbinden der Reibscheiben miteinander bevorzugt eine axiale Erstreckung radial-außerhalb oder radial-innerhalb des Energiespeicherelements gebildet ist.

Es wird weiterhin in einer vorteilhaften Ausführungsform der Reibeinrichtung vorgeschlagen, dass das Energiespeicherelement über in Umlaufrichtung wirksame Einhängungen des Energiespeicherelements mit einer der Reibscheiben drehmomentübertragend verbunden ist.

Hier ist vorgeschlagen, dass zum Erreichen des zuvor genannten Ziels einer geringen oder keinen Relativbewegung zwischen dem Energiespeicherelement und den Reibscheiben Einhängungen an dem Energiespeicherelement vorgesehen sind, welche mit zumindest einer der Reibscheiben verbunden ist, sodass eine Relativbewegung in Umlaufrichtung unterbunden ist. Auch diese Einhängungen sind beispielsweise als nach radial-außen oder nach radial-innen gerichtete Laschen mit oder ohne axiale Erstreckung ausgeführt. Ob die Laschen an der Reibscheibe oder an dem Energiespeicherelement vorgesehen sind und entsprechende Aussparungen an der Reibscheibe beziehungsweise Energiespeicherelement vorgesehen sind, ist unerheblich.

Gemäß einem weiteren Aspekt wird ein Torsionsschwingungsdämpfer für einen Antriebsstrang vorgeschlagen, aufweisend
ein Eingangselement und ein Ausgangselement, sowie eine Reibeinrichtung nach einer Ausführungsform gemäß der obigen Beschreibung,
wobei das Eingangselement mittels der Reibeinrichtung mit dem Ausgangselement dissipativ gedämpft drehmomentübertragend verbunden ist,
wobei bevorzugt der Torsionsschwingungsdämpfer als Pendelwippendämpfer ausgeführt ist.

Torsionsschwingungsdämpfer sind aus dem Stand der Technik bekannt und verbreitet eingesetzt beispielsweise in Hybrid-Applikationen umfassend eine Verbrennungskraftmaschine und eine elektrische Antriebsmaschine (beispielsweise im Bereich von Kraftfahrzeugen), wobei im Betrieb Drehungleichförmigkeiten einer Verbrennungskraftmaschine mittels des Torsionsschwingungsdämpfers reduziert werden und der Drehmomentbegrenzer Übermomente aus dem Antriebsstrang herausfiltert, um im Falle eines kritischen Resonanzfahrzustands den Antriebsstrang vor einer Beschädigung zu schützen. Für einige Anwendungen ist es erwünscht, Hysterese-Eigenschaften mittels zumindest einer Reibeinrichtung vorzuhalten, womit ein Ansprechverhalten des Torsionsschwingungsdämpfers verzögert beziehungsweise moduliert wird. Alternativ ist die Reibeinrichtung dem Torsionsschwingungsdämpfer vorgeschaltet beziehungsweise nachgeschaltet, wobei bevorzugt der Torsionsschwingungsdämpfer (nahezu) frei von Dissipation dämpfend arbeitet und die Reibeinrichtung zum dissipativen Dämpfen in einem (über den Verdrehwinkel) definierten Drehmomentbereich arbeitet.

Aus dem Stand der Technik sind als besondere Ausführungsform eines Torsionsschwingungsdämpfers sogenannte Pendelwippendämpfer bekannt.

Beispielsweise sind aus der DE 10 2019 121 204 A1 und der DE 10 2019 121 205 A1 Konzepte bekannt, um die Steifigkeit einer rotierenden Welle beziehungsweise eines rotierenden Wellensystems in einem Antriebsstrang zu modulieren. Diese Pendelwippendämpfer umfassen ein Eingangselement und ein Ausgangselement, welche (in beiden Richtungen) drehmomentübertragend miteinander verbunden sind. Zwischengeschaltet sind eine Mehrzahl von Wippenelementen (auch als Wippen bezeichnet) und eine Mehrzahl von Federelementen. Die Wippenelemente sind mittels zumindest eines Wälzkörpers an dem Eingangselement und/oder an dem Ausgangselement relativ verlagerbar abgestützt. Die Wälzkörper sind mittels der Federelemente zwischen der jeweiligen Übersetzungsbahn und komplementären Gegenbahn abrollbar eingespannt. Mittels dieses Pendelwippendämpfers ist der relative Verdrehwinkel zwischen dem Eingangselement und dem Ausgangselement in einen Federweg der Federelemente umgewandelt. Mittels der Übersetzungsbahnen und der komplementären Gegenbahnen, welche ein Rampengetriebe bilden, ist ein Übersetzungsverhältnis einstellbar und damit eine Steifigkeit des Pendelwippendämpfers einstellbar. Vorteilhaft ist hierbei auch, dass das Übersetzungsverhältnis nicht konstant sein muss, sondern die Steigung des Rampengetriebes über den Verdrehwinkel des Eingangselements zum Ausgangselement veränderlich einstellbar ist. Ein weiterer Vorteil eines solchen Pendelwippendämpfers im Vergleich zu anderen Ausführungsformen ist, dass der Pendelwippendämpfer (nahezu) keine Hysterese-Eigenschaften, zumal beim Nulldurchgang, aufweist.

Mit der hier vorgeschlagenen Reibeinrichtung ist über eine angestrebte Lebensdauer eine ausreichende Konstanz der Reibmomentkennlinie zum Einstellen einer Torsionsweichheit des Torsionsschwingungsdämpfers beziehungsweise des Antriebsstrangs erzielbar, wobei hierzu kein zusätzlicher Bauraum oder zusätzliche Bauteile benötigt werden. Bevorzugt ist weiterhin eine solche Reibeinrichtung mit einem konventionellen Torsionsschwingungsdämpfer kombinierbar als Ersatz für eine konventionelle Reibeinrichtung. Zudem sind bevorzugt die Konstruktionskosten und Bauteilkosten gleich oder sogar geringer als bei einer konventionellen Reibeinrichtung.

Gemäß einem weiteren Aspekt wird ein Antriebsstrang vorgeschlagen, aufweisend zumindest die folgenden Komponenten:
- zumindest eine Antriebsmaschine mit einer Maschinenwelle;
- ein Getriebe zum Übertragen eines Drehmoments der zumindest einen Maschinenwelle an zumindest einen Verbraucher; und
- einen Torsionsschwingungsdämpfer nach einer Ausführungsform gemäß der obigen Beschreibung,
wobei die zumindest eine Antriebsmaschine und der zumindest eine Verbraucher mittels des Torsionsschwingungsdämpfers gegen Torsionsschwingungen gedämpft drehmomentübertragend verbunden sind.

Der Antriebsstrang ist dazu eingerichtet, ein von einer Antriebsmaschine, zum Beispiel einer Verbrennungskraftmaschine und/oder einer elektrischen Antriebsmaschine, bereitgestelltes und über ihre Maschinenwelle abgegebenes Drehmoment für zumindest einen Verbraucher zu übertragen. Ein beispielhafter Verbraucher ist in der Anwendung in einem Kraftfahrzeug zumindest ein Vortriebsrad für den Vortrieb des Kraftfahrzeugs. In einer Ausführungsform sind eine Mehrzahl von Antriebsmaschinen vorgesehen, beispielsweise in einem Hybrid-Antriebsstrang eine Verbrennungskraftmaschine und zumindest eine elektrische Antriebsmaschine, beispielsweise ein Motor-Generator. Indem in dem Antriebsstrang ein Drehmomentbegrenzer eingesetzt ist, ist die Antriebsmaschine und/oder die übrigen Komponenten des Antriebsstrangs vor einer Beschädigung infolge von einer Drehmomentspitze beziehungsweise einem Drehmomentschlag geschützt.

Mit dem hier vorgeschlagenen Antriebsstrang mitsamt einem Torsionsschwingungsdämpfer (bevorzugt einem Pendelwippendämpfer) mit einer Reibeinrichtung, wie sie hierin beschrieben ist, ist über eine angestrebte Lebensdauer eine ausreichende Konstanz der Reibmomentkennlinie zum Einstellen einer Torsionsweichheit des Antriebsstrangs erzielbar, wobei hierzu kein zusätzlicher Bauraum oder zusätzliche Bauteile benötigt werden. Bevorzugt ist weiterhin eine solche Reibeinrichtung mit einem konventionellen Torsionsschwingungsdämpfer kombinierbar als Ersatz für eine konventionelle Reibeinrichtung. Zudem sind bevorzugt die Konstruktionskosten und Bauteilkosten gleich oder sogar geringer als bei einem konventionellen Torsionsschwingungsdämpfer mit Reibeinrichtung.

Gemäß einem weiteren Aspekt wird ein Kraftfahrzeug vorgeschlagen, aufweisend zumindest ein Vortriebsrad, welches mittels eines Antriebsstrangs nach einer Ausführungsform gemäß der obigen Beschreibung zum Vortrieb des Kraftfahrzeugs antreibbar ist.

Die meisten Kraftfahrzeuge weisen heutzutage einen Frontantrieb auf und ordnen teilweise die Antriebsmaschine, beispielsweise eine Verbrennungskraftmaschine und/oder eine elektrische Antriebsmaschine, vor der Fahrerkabine und quer zur Hauptfahrrichtung (Längsachse) an. Der radiale Bauraum ist gerade bei einer solchen Anordnung besonders gering und es ist daher besonders vorteilhaft, einen Antriebsstrang mit Komponenten kleiner Baugröße zu verwenden. Ähnlich gestaltet sich der Einsatz eines Antriebsstrangs in motorisierten Zweirädern, für welche im Vergleich zu vorbekannten Zweirädern stets gesteigerte Leistung bei gleichbleibendem Bauraum gefordert wird. Mit der Hybridisierung der Antriebsstränge verschärft sich diese Problemstellung auch für Hinterachsanordnungen, und auch hier sowohl in Längsanordnung als auch in Queranordnung der Antriebsmaschinen.

Mit dem hier vorgeschlagenen Kraftfahrzeug mit einem Antriebsstrang wie hierin beschrieben, ist über eine angestrebte Lebensdauer eine ausreichende Konstanz der Reibmomentkennlinie zum Einstellen einer Torsionsweichheit des Antriebsstrangs erzielbar, wobei hierzu kein zusätzlicher Bauraum oder zusätzliche Bauteile benötigt werden. Bevorzugt sind die Konstruktionskosten und Bauteilkosten gleich oder sogar geringer als bei einem konventionellen Antriebsstrang.

Personenkraftwagen werden einer Fahrzeugklasse nach beispielsweise Größe, Preis, Gewicht und Leistung zugeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car zugeordnet und im Britischen Markt entsprechen sie der Klasse Supermini beziehungsweise der Klasse City Car. Beispiele der Kleinstwagenklasse sind ein Volkswagen up! oder ein Renault Twingo. Beispiele der Kleinwagenklasse sind ein Alfa Romeo MiTo, Volkswagen Polo, Ford Ka+ oder Renault Clio. Bekannte Hybrid-Fahrzeuge sind BMW 330e oder der Toyota Yaris Hybrid. Als Mild-Hybride bekannt sind beispielsweise ein Audi A6 50 TFSI e oder ein BMW X2 xDrive25e.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in
- Fig. 1:: eine Reibeinrichtung in einer Explosionsdarstellung;
- Fig. 2:: die erste Reibscheibe gemäß Fig. 1 in einer Frontansicht;
- Fig. 3:: die erste Reibscheibe in der Schnittansicht **A-A** gemäß Fig. 2;
- Fig. 4:: ein Weg-Kraft-Diagramm der Federsteifigkeit einer Reibeinrichtung;
- Fig. 5:: ein Weg-Kraft-Diagramm der Federsteifigkeit einer Reibeinrichtung in einer weiteren Ausführungsform; und
- Fig. 6:: ein Kraftfahrzeug mit einem Antriebsstrang.

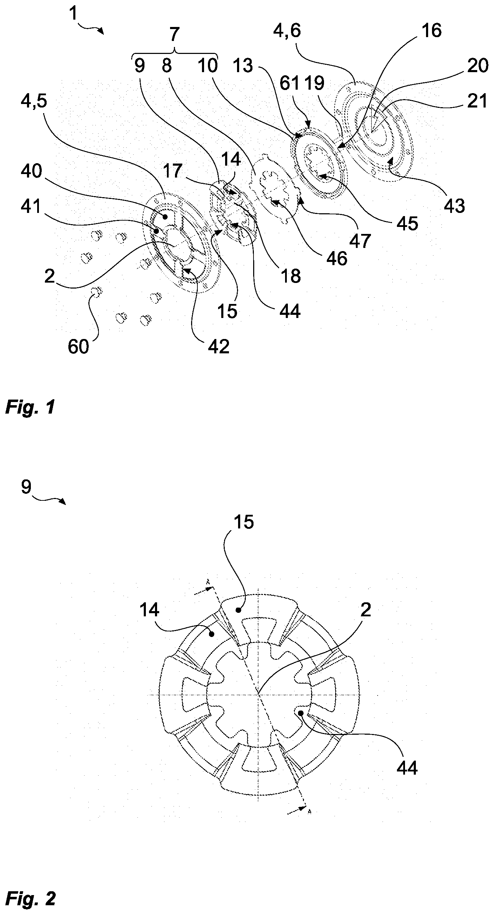

In Fig. 1 ist eine Reibeinrichtung **1** in einer Explosionsdarstellung dargestellt, wobei die Komponenten entlang der zentralen Drehachse **2** axial zueinander versetzt dargestellt sind. Die Eingangsseite **4** ist von einer ersten Eingangsscheibe **5** (darstellungsgemäß vorne links) und einer zweiten Eingangsscheibe **6** (darstellungsgemäß hinten rechts) gebildet, welche hier (rein optional) mittels einer Mehrzahl von Nieten **60** miteinander fest drehmomentübertragend verbunden sind. Axial zentral ist die Ausgangsseite **7** dargestellt, welche ein Energiespeicherelement **8** (hier eine Tellerfeder) und zwei Reibscheiben **9,10** umfasst. Die Tellerfeder **8** ist zwischen einer ersten Reibscheibe **9** (darstellungsgemäß links vor der Tellerfeder **8**) und einer zweite Reibscheibe **10** (darstellungsgemäß rechts hinter der Tellerfeder **8**) angeordnet. Die Tellerfeder **8** ist relativ zu den Reibscheiben **9,10** rotatorisch fixiert, hier über die korrespondierenden Einhängungen **44,45,46,47,** von denen eine erste Einhängung **44** (der ersten Reibscheibe **9**) und eine zweite Einhängung **45** (der zweiten Reibscheibe **10**) und eine dritte Einhängung **46** (der Tellerfeder **8**) hier mit einer Außenverzahnung eines Anschlusselements (hier nicht dargestellt) zusammenwirkend mittelbar zueinander rotatorisch fixiert sind. Rein optional sind an der Tellerfeder **8** radial-außen vierte Einhängungen **47** gebildet, welche in korrespondierende Ausnehmungen **61** der zweiten Reibscheibe **10** zur relativen rotatorischen Fixierung und/oder zur korrekten Vormontage aufgenommen sind. Ein relativer Verdrehwinkel zwischen der Eingangsseite **4** und der Ausgangsseite **7** führt somit zu einem relativen Verdrehen der Eingangsscheiben **5,6** zu den Reibscheiben **9,10,** wobei die Tellerfeder **8** unmittelbar von den Reibscheiben **9,10** oder über das besagte Anschlusselement mitgenommen ist.

Die Tellerfeder **8** ist baulich vorgespannt, nämlich von den entsprechend axial voneinander beabstandeten Eingangsscheiben **5,6,** sowie der (wirksamen) axialen Bautiefe der Reibscheiben **9,10**. Die Tellerfeder **8** ist zum Einleiten der dritten Axialkraft **19** an einem dritten Kontaktbereich **13** der zweiten Reibscheibe **10** abgestützt und die zweite Reibscheibe **10** leitet diese dritte Axialkraft **19** zum Erzeugen eines Reibmoments über ihre dritte Reibzone **16** (hier verdeckt) auf die zweite Gegenreibfläche **43** (vergleiche unten) weiter. Die erste Axialkraft **17** beziehungsweise die (hier größere) zweite Axialkraft **18** werden von der Tellerfeder **8** auf jeweils eine der zwei (hier verdeckte) Kontaktbereiche **11,12** der ersten Reibscheibe **9** weitergeleitet und von der ersten Reibscheibe **9** über ihre erste Reibzone **14** beziehungsweise ihre zweite Reibzone **15** an die erste Gegenreibfläche **42** (vergleiche unten) der erste Eingangsscheibe **5** weitergegeben.

Die zweite Eingangsscheibe **6** weist eine (rein optional geschlossene) zweite Gegenreibfläche **43** auf, welche mit der (hier verdeckten) dritten Reibzone **16** der zweiten Reibscheibe **10** zusammenwirkt. Die erste Eingangsscheibe **5** weist eine solche erste Gegenreibfläche **42** auf, welche von einer Mehrzahl von Radialstegen **41** gebildet ist. Die Radialstege **41** sind zwischen Sektorausbrüchen **40** gebildet. In einer alternativen Ausführungsform ist die erste Gegenreibfläche **42** von axial hervorstehenden Radial-Segmenten der ersten Eingangsscheibe **5** gebildet, wobei deren Form den gezeigten Radialstegen **41** entspricht. Die Form und Ausdehnung der Radialstege **41** ist von der komplementären Form der ersten Reibscheibe **9** beziehungsweise deren zwei Reibzonen **14,15** und dem Rampen-artigen Übergang in Umlaufrichtung abhängig, von welcher die Rampenübersetzung gebildet ist. Es sei darauf hingewiesen, dass in dieser Ausführungsform die Rampenübersetzung zum Umsetzen eines Verdrehwinkels in einen Axialhub allein zwischen der ersten Eingangsscheibe **5** und der ersten Reibscheibe **9** gebildet ist. Alternativ ist eine solche Rampenübersetzung allein oder zusätzlich zwischen der zweiten Eingangsscheibe **6** und der zweiten Reibscheibe **10** gebildet. Weiteres hierzu wird im Detail mit Bezug auf die in Fig. 2 gezeigte erste Reibscheibe **9** beschrieben.

Bei der zweiten Eingangsscheibe **6** ist ein erster Verdrehwinkel **20** und ein zweiter Verdrehwinkel **21** gezeigt, wobei diese jeweils als der (maximale) Grenzwinkel ausgehend von einer Nulllage zu verstehen sind. Insofern ist in dem Bereich des ersten Verdrehwinkels **20** die erste Reibzone **14** der ersten Reibscheibe **9** mit der ersten Gegenreibfläche **42** der ersten Eingangsscheibe **5** in reibschlüssigem Kontakt und im Bereich des zweiten Verdrehwinkels **21** (anschließend an den ersten Verdrehwinkel **20**) die zweite Reibzone **15** der ersten Reibscheibe **9** mit der ersten Gegenreibfläche **42** der ersten Eingangsscheibe **5** in reibschlüssigem Kontakt.

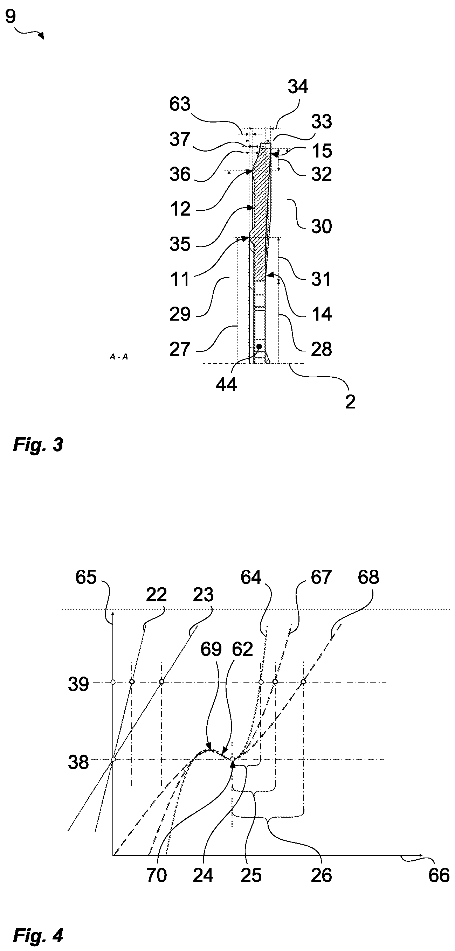

In Fig. 2 ist die erste Reibscheibe **9** gemäß Fig. 1 in einer Frontansicht auf diejenige der ersten Eingangsscheibe **5** zugewandten Seite dargestellt. Es ist durch die Linien zur Kennzeichnung der Radienansätze in der Fläche der ersten Reibscheibe **9** gut zu erkennen, dass die erste Reibzone **14** axial tiefer als die zweite Reibzone **15** angeordnet ist und zwischen den Reibzonen **14,15** ein Rampen-artiger Übergang in Umlaufrichtung gebildet ist. Hier ist eine vorteilhafte Ausführungsform gezeigt, bei welcher der Rampen-artige Übergang in Umlaufrichtung von einer Rampenneigung in Radialrichtung überlagert ist. Diese ist nachfolgend hinsichtlich Fig. 3 genauer beschrieben. Die Schnittansicht **A-A** der Fig. 3 ist hier gekennzeichnet. Dieser Schnitt führt durch den Rampen-artigen Übergang, sodass radial-innen die erste Reibzone **14** und radial-außen die zweite Reibzone **15** geschnitten sind.

In Fig. 3 ist die erste Reibscheibe **9** in der Schnittansicht **A-A** gemäß Fig. 2 dargestellt. Diejenige der Tellerfeder **8** (vergleiche Fig. 1) zugewandten Oberfläche **35** ist hier links und diejenige der ersten Eingangsscheibe **5** zugewandten Seite, welche in Fig. 2 gezeigt ist, der ersten Reibscheibe **9** ist rechts dargestellt. Der Schnitt **A-A** ist durch den Rampen-artigen Übergang von der ersten Reibzone **14** zu der zweiten Reibzone **15** geführt.

Die tellerfederseitige Oberfläche **35** der ersten Reibscheibe **9** umfasst in dieser Ausführungsform (rein optional) einen ersten Kontaktbereich **11** bei einem ersten (tellerfederseitigen) Durchmesser **27** und weiter radial-außen einen zweiten Kontaktbereich **12** bei einem zweiten (tellerfederseitigen) Durchmesser **29.** Die Tellerfeder **8** ist abhängig von ihrer Belastung mit dem ersten Kontaktbereich **11** in Kontakt zum Übertragen der ersten Axialkraft **17** und/oder mit dem zweiten Kontaktbereich **12** in Kontakt zum Übertragen der zweiten Axialkraft **18.** Beispielsweise ist bis zu dem Ende des (Bereichs des) ersten Verdrehwinkels **20** allein der erste Kontaktbereich **11** mit der Tellerfeder **8** in Kontakt und vom Anfang des (Bereichs des) zweiten Verdrehwinkels **21** allein der zweite Kontaktbereich **12** mit der Tellerfeder **8** in Kontakt. In einer Ausführungsform ist beim Übergang von dem ersten Verdrehwinkel **20** in den zweiten Verdrehwinkel **21** die Tellerfeder **8** mit beiden Kontaktbereichen **11,12** der ersten Reibscheibe **9** in Kontakt. Diese Situation ist beispielsweise bei der Planlage **62** der Tellerfeder **8** gegeben.

Die Tellerfeder **8** ist gemäß einer Ausführungsform in der entspannten beziehungsweise vorgespannten Lage bis hin zu der Planlage **62** derart ausgeknickt, dass der radial-äußere Rand der Tellerfeder **8** mit dem dritten Kontaktbereich **13** der zweiten Reibscheibe **10** (vergleiche Fig. 1) in kraftübertragendem Kontakt steht und mit dem radial-inneren Rand der Tellerfeder **8** mit dem ersten Kontaktbereich **11** der ersten Reibscheibe **9** in kraftübertragendem Kontakt steht. Die Tellerfeder **8** ist gemäß dieser Ausführungsform in der gespannten Lage jenseits der Planlage **62** derart ausgeknickt, dass der radial-innere Rand der Tellerfeder **8** mit dem dritten Kontaktbereich **13** der zweiten Reibscheibe **10** (vergleiche Fig. 1) in kraftübertragendem Kontakt steht und mit dem radial-äußeren Rand der Tellerfeder **8** mit dem zweiten Kontaktbereich **11** der ersten Reibscheibe **9** in kraftübertragendem Kontakt steht. Die dem ersten Kontaktbereich **11** zugehörige erste Reibzone **14** ist bevorzugt radial-innen angeordnet und die dem zweiten Kontaktbereich **12** zugehörige zweite Reibzone **15** ist bevorzugt radial-außen angeordnet.

Der erste eingangsscheibenseitige Durchmesser **28** ist hier veranschaulichend an der Innenkante definiert, muss jedoch, wenn als mittlerer Reibzonen-Durchmesser betrachtet, weiter radial-außen liegen. Der zweite eingangsscheibenseitige Durchmesser **30** ist hier veranschaulichend an der Außenkante definiert, muss jedoch, wenn als mittlerer Reibzonen-Durchmesser betrachtet, weiter radial-innen liegen. In einer Ausführungsform ist dann im Gegenteil der zweite Durchmesserversatz **32** bei dem zweiten Kontaktbereich **12** und der zweiten Reibzone **15** größer als der erste Durchmesserversatz **31** bei dem ersten Kontaktbereich **11** und der ersten Reibzone **14.** Bevorzugt ist der Durchmesserversatz **31,32** jedoch jeweils auf die gezeigten eingangsscheibenseitigen Durchmesser **28,30,** also der Außenkante der radial-äußeren Reibzone **15** und der Innenkante der radial-inneren Reibzone **14,** definiert.

Bei der hier gezeigten Ausführungsform ist (rein optional) der erste Abstand **33** zwischen dem ersten Kontaktbereich **11** und der ersten Reibzone **14** beziehungsweise der Innenkante der ersten Reibzone **14** ungleich dem zweiten Abstand **34** zwischen dem zweiten Kontaktbereich **12** und der zweiten Reibzone **15** beziehungsweise der Außenkante der zweiten Reibzone **15.** Zudem ist die erste Höhe **36** des ersten Kontaktbereichs **11** größer als die zweite Höhe **37** des zweiten Kontaktbereichs **12,** sodass sich eine Höhendifferenz **63** einstellt. Der zweite Abstand **34** ist bevorzugt um mehr als die Höhendifferenz **63** größer als der erste Abstand **33.** Die erste Reibscheibe **9** ist damit am Innenumfang dünner als am Außenumfang beziehungsweise beim zweiten tellerfederseitigen Durchmesser **29.** Die Steifigkeit der ersten Reibscheibe **9** ist damit bei Einwirken der Tellerfeder **8** auf den ersten Kontaktbereich **11** geringer als beim Einwirken auf den zweiten Kontaktbereich **12.** Daraus resultiert in der Reihenschaltung von der Tellerfederkennlinie **64** und der Nachgiebigkeit der ersten Reibscheibe 9 eine Verlängerung des nutzbaren (Gesamt-) Wegbereichs im Vergleich zu dem nutzbaren Wegbereich allein der Tellerfeder 8.

In Fig. 4 ist ein Weg-Kraft-Diagramm gezeigt, in welchem mit der Kraftachse **65** als Ordinate und der Wegachse **66** als Abszisse eine Tellerfederkennlinie **64** (fein gestrichelt) und zwei Gesamtnachgiebigkeiten **22,23** (durchgezogene Geraden), sowie die aus der Überlagerung resultierenden Gesamtkennlinien **67,68** (grob gestrichelte und flachere Linie als die Tellerfederkennlinie 64) aufgetragen sind. Die Tellerfederkennlinie **64** ist links und rechts der Planlage **62** jeweils Parabel-förmig gebildet mit entgegengesetzter Ausrichtung, wobei das lokale Maximum **69** der Tellerfederkraft vor Erreichen der Planlage **62** und das lokale Minimum **70** nach Überschreiten der Planlage **62** erreicht wird. Es bildet sich somit annäherungsweise um die Planlage **62** ein Kraftplateau um einen Abschnitt der Tellerfederkennlinie **64** aus.

Hier ist ein nutzbarer Wegbereich **24,25,26** zwischen einer minimal nutzbaren Kraft **38** und einer maximal nutzbaren Kraft **39** derart (infolge der Einbaulage) definiert, dass die minimal nutzbare Kraft **38** bei dem lokalen Minimum **70** der Tellerfederkennlinie **64** (rechts der Planlage **62**) angeordnet ist.

Die Gesamtnachgiebigkeit **22,23** ist in dem Weg-Kraft-Diagramm mit einer (idealisiert konstanten) Steigung dargestellt, und zwar mit einer minimalen Gesamtnachgiebigkeit **22** (steif) und einer maximalen Gesamtnachgiebigkeit **23.** Es ergibt sich in der Reihenschaltung damit eine im Vergleich zu der Tellerfederkennlinie **64** leicht flachere (minimale) Gesamtkennlinie **67** für die minimale Gesamtnachgiebigkeit **22** und deutlich flachere (maximale) Gesamtkennlinie **68** für die maximale Gesamtnachgiebigkeit **23.** Es sei darauf hingewiesen, dass der Betrag des lokalen Maximums **69** und des lokalen Minimums **70** unverändert bleibt. Hier ist der Anstieg der Parabel-artigen Abschnitte der Gesamtkennlinien **67,68** deutlich flacher als bei der Tellerfederkennlinie **64.** Diese Ausführungsform der Gesamtkennlinie **67,68** ist bevorzugt für ein Verhältnis der maximalen nutzbaren Kraft **39** [Zähler] zu der minimalen nutzbaren Kraft **38** [Nenner] von größer 1,5 [anderthalb] besonders vorteilhaft, wobei hier (wie oben bereits beschrieben) einzig der Wegbereich **24,25,26** ausgehend von dem lokalen Minimum **70** (rechts der Planlage **62**) genutzt wird.

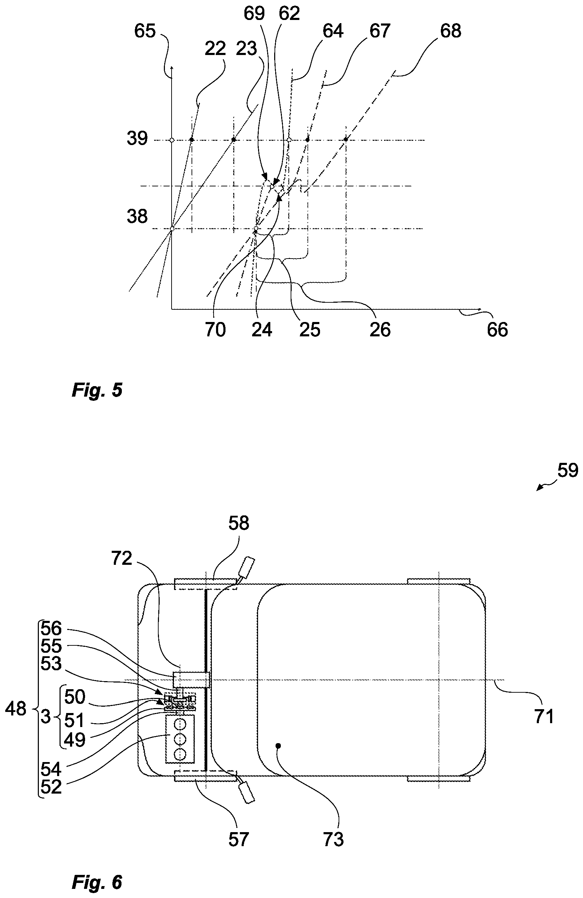

In Fig. 5 ist ein Weg-Kraft-Diagramm ähnlich wie in Fig. 4 gezeigt, und insoweit wird ohne Ausschluss der Allgemeinheit auf die dortige Beschreibung verwiesen. Auch hier ist ein nutzbarer Wegbereich **24,25,26** zwischen einer minimal nutzbaren Kraft **38** und einer maximal nutzbaren Kraft **39** derart (infolge der Einbaulage) definiert, dass die minimal nutzbare Kraft **38** noch vor (also links von) dem lokalen Maximum **69** der Tellerfederkennlinie **64** (links der Planlage **62**) und die maximal nutzbare Kraft **39** wie in Fig. 4 hinter (also rechts von) dem lokalen Minimum **70** der Tellerfederkennlinie **64** (rechts der Planlage **62**) angeordnet ist. Die Gesamtnachgiebigkeit **22,23** ist ohne Ausschluss der Allgemeinheit rein der Übersichtlichkeit halber mit der in Fig. 4 gezeigten Ausführungsform gleichartig mit den gleichen Folgen für die Veränderung der Tellerfederkennlinie **64** hin zu den Gesamtkennlinien **67,68.**

Diese Ausführungsform der Gesamtkennlinie **67,68** ist bevorzugt für ein Verhältnis der maximalen nutzbaren Kraft **39** [Zähler] zu der minimalen nutzbaren Kraft **38** [Nenner] von größer 2 [zwei] besonders vorteilhaft, wobei hier (wie oben bereits beschrieben) der Wegbereich **24,25,26** links und rechts der Planlage **62** genutzt wird, wobei hier rein optional die Planlage **62** etwa oder exakt mittig zwischen der minimalen nutzbaren Kraft **38** und der maximalen nutzbaren Kraft **39** angeordnet ist.

In Fig. 6 ist ein Kraftfahrzeug **59** mit einem Antriebsstrang **48** in einer schematischen Draufsicht gezeigt. Das Kraftfahrzeug **59** weist eine Längsachse **71** und eine Motorachse **72** auf, wobei die Motorachse **72** (rein optional) hier quer vor der Fahrerkabine **73** angeordnet ist. Der Antriebsstrang **48** umfasst eine erste Antriebsmaschine **52,** welche vorzugsweise als Verbrennungskraftmaschine **52** ausgeführt ist, mit einer ersten Maschinenwelle **54** (dann beispielsweise die Verbrennerwelle **54**), eine zweite (bevorzugt elektrische) Antriebsmaschine **53** (hier als sogenanntes Hybridmodul ausgeführt) mit einer Rotorwelle **55,** sowie ein Getriebe **56** (hier beispielsweise ein Umschlingungsgetriebe [CVT: continuous variable transmission]). Die Verbrennerwelle **54** ist mittels eines Drehmomentbegrenzers mit der Rotorwelle **55** drehmomentübertragend verbunden.

Die Rotorwelle **55** wiederum ist mit dem Getriebe **56** und das Getriebe **56** mit einem linken Vortriebsrad **57** und einem rechten Vortriebsrad **58** drehmomentübertragend verbunden. Mittels beider Antriebsmaschinen **52,53** beziehungsweise über deren Maschinenwellen **54,55** ist gleichzeitig oder zu unterschiedlichen Zeiten ein (Zug-) Drehmoment für den Antriebsstrang **48** abgebbar.

Die Vortriebsräder **57,58** sind von den Antriebsmaschinen **52,53** somit mit einer (bevorzugt veränderbaren) Übersetzung versorgbar. Es ist aber auch ein (Schub-) Drehmoment aufnehmbar, beispielsweise mittels der Verbrennungskraftmaschine **52** zum Motorbremsen und/oder mittels der elektrischen Antriebsmaschine **53** zur Rekuperation von Bremsenergie. Mittels des Torsionsschwingungsdämpfers 3 (hier beispielsweise als Pendelwippendämpfer **51** ausgeführt) umfassend ein Eingangselement **49,** ein Ausgangselement **50** eine Reibeinrichtung **1** (nicht dargestellt) ist die elektrische Antriebsmaschine **53** (verbrennerseitig) vor systembedingten Drehungleichförmigkeiten geschützt, weil diese vergleichmäßigt sind. Das Eingangselement **49** ist beispielsweise eine Flanschscheibe und das Ausgangselement **50** ist beispielsweise eine weitere Flanschscheibe. Dabei sind eine Reihenschaltung aus dem Torsionsschwingungsdämpfer **3** und der Reibeinrichtung **1** nahezu bauraumneutral ausgeführt und zudem sind abhängig von einem Drehmomentniveau unterschiedliche Dämpfungseigenschaften eingestellt, und zwar zum einen in dem Pendelwippendämpfer **51** nahezu frei von Dissipation und zum anderen abhängig vom resultierenden Verdrehwinkel **20,21** dissipativ mittels der Reibeinrichtung **1.** Damit sind beispielsweise gewünschte (veränderliche) Hysterese-Eigenschaften des Torsionsschwingungsdämpfers **3** eingestellt.

Mit der hier vorgeschlagenen Reibeinrichtung ist ohne die Notwendigkeit zusätzlichen Bauraums oder zusätzlicher Bauteile ein nutzbarer Wegbereich verlängert.

**Bezugszeichenliste**

| | | | |
|---|---|---|---|
| 1 | Reibeinrichtung | 38 | minimale nutzbare Kraft |
| 2 | Drehachse | 39 | maximale nutzbare Kraft |
| 3 | Torsionsschwingungsdämpfer | 40 | Sektorausbruch |
| 4 | Eingangsseite | 41 | Radialsteg |
| 5 | erste Eingangsscheibe | 42 | erste Gegenreibfläche |
| 6 | zweite Eingangsscheibe | 43 | zweite Gegenreibfläche |
| 7 | Ausgangsseite | 44 | erste Einhängung |
| 8 | Energiespeicherelement | 45 | zweite Einhängung |
| 9 | erste Reibscheibe | 46 | dritte Einhängung |
| 10 | zweite Reibscheibe | 47 | vierte Einhängung |
| 11 | erster Kontaktbereich | 48 | Antriebsstrang |
| 12 | zweiter Kontaktbereich | 49 | Eingangselement |
| 13 | dritter Kontaktbereich | 50 | Ausgangselement |
| 14 | erste Reibzone | 51 | Pendelwippendämpfer |
| 15 | zweite Reibzone | 52 | Verbrennungskraftmaschine |
| 16 | dritte Reibzone | 53 | elektrische Antriebsmaschine |
| 17 | erste Axialkraft | 54 | Verbrennerwelle |
| 18 | zweite Axialkraft | 55 | Rotorwelle |
| 19 | dritte Axialkraft | 56 | Getriebe |
| 20 | erster Verdrehwinkel | 57 | linkes Vortriebsrad |
| 21 | zweiter Verdrehwinkel | 58 | rechtes Vortriebsrad |
| 22 | minimale Gesamtnachgiebigkeit | 59 | Kraftfahrzeug |
| 23 | maximale Gesamtnachgiebigkeit | 60 | Niet |
| 24 | nutzbarer Wegbereich (Tellerfeder) | 61 | Ausnehmung |
| 25 | minimaler nutzbarer Wegbereich | 62 | Planlage |
| 26 | maximaler nutzbarer Wegbereich | 63 | Höhendifferenz |
| 27 | erster tellerfederseitiger Durchmesser | 64 | Tellerfederkennlinie |
| | | 65 | Kraftachse |
| 28 | erster eingangsscheibenseitiger Durchmesser | 66 | Wegachse |
| | | 67 | minimale Gesamtkennlinie |
| 29 | zweiter tellerfederseitiger Durchmesser | 68 | maximale Gesamtkennlinie |
| | | 69 | lokales Maximum |
| 30 | zweiter eingangsscheibenseitiger Durchmesser | 70 | lokales Minimum |
| | | 71 | Längsachse |
| 31 | erster Durchmesserversatz | 72 | Motorachse |
| 32 | zweiter Durchmesserversatz | 73 | Fahrerkabine |
| 33 | erster Abstand | | |
| 34 | zweiter Abstand | | |
| 35 | Oberfläche der ersten Reibscheibe | | |
| 36 | erste Höhe | | |
| 37 | zweite Höhe | | |

## Patentansprüche

1. Reibeinrichtung (1) mit einer Drehachse (2) für einen Torsionsschwingungsdämpfer (3), aufweisend zumindest die folgenden Komponenten:
- eine Eingangsseite (4) mit einer ersten Eingangsscheibe (5) und mit einer zweiten Eingangsscheibe (6), welche miteinander verbunden sind; und
- eine Ausgangsseite (7) mit einem Energiespeicherelement (8), einer ersten Reibscheibe (9) und einer zweiten Reibscheibe (10), wobei das Energiespeicherelement (8) axial zwischen den Reibscheiben (9,10) angeordnet ist, wobei die Reibscheiben (9,10) energiespeicherelementseitig eine Mehrzahl von Kontaktbereichen (11,12,13) und eingangsscheibenseitig eine Mehrzahl von Reibzonen (14,15,16) aufweisen,
wobei zwischen der Eingangsseite (4) und der Ausgangsseite (7) ein Drehmoment reibschlüssig übertragbar ist, indem das Energiespeicherelement (8) zum Ausüben einer Axialkraft (17,18,19) vorgespannt ist und diese Axialkraft (17,18,19) geleitet ist über:
- jeweils zumindest einen der Kontaktbereiche (11,12,13) von dem Energiespeicherelement (8) auf die jeweilige Reibscheibe (9,10), sowie
- jeweils zumindest eine der Reibzonen (14,15,16) von den Reibscheiben (9,10) auf die jeweils korrespondierende Eingangsscheibe (5,6), wobei zwischen der Ausgangsseite (7) und der Eingangsseite (4) infolge eines Drehmomentgefälles ein relativer Verdrehwinkel (20,21) um die Drehachse (2) bewirkbar ist, und
von dem anliegenden Verdrehwinkel (20,21) abhängig ist:
- ein Betrag einer Axialkraft (17,18,19), und
- der Kontaktbereich (11,12,13) und/oder die Reibzone (14,15,16), über welche die Axialkraft (17,18,19) geleitet ist,
wobei ein erster der Kontaktbereiche (11) und eine erste der Reibzonen (14) auf jeweils einem ersten Durchmesser (27,28), sowie ein zweiter der Kontaktbereiche (12) und eine zweite der Reibzonen (15) auf jeweils einem zweiten Durchmesser (29,30) angeordnet sind, wobei zumindest einer der ersten Durchmesser (27,28) ungleich dem jeweils gleichseitigen zweiten Durchmesser (29,30) ist,
**dadurch gekennzeichnet, dass**
ein erster axialer Abstand (33) zwischen dem ersten Kontaktbereich (11) und der ersten Reibzone (14) ungleich einem zweiten axialen Abstand (34) zwischen dem zweiten Kontaktbereich (12) und der zweiten Reibzone (15) ist.

2. Reibeinrichtung (1) nach Anspruch 1, wobei
die erste Reibzone (14) und die zweite Reibzone (15) in Umlaufrichtung und radialer Richtung rampenförmig ineinander übergehen.

3. Reibeinrichtung (1) nach Anspruch 1 oder Anspruch 2, wobei der erste Kontaktbereich (11) und der zweite Kontaktbereich (12) aus derjenigen dem Energiespeicherelement (8) zugewandten Oberfläche (35) der betreffenden Reibscheibe (9) mit einer voneinander unterschiedlichen Höhe (36,37) hervorstehen,
wobei bevorzugt zumindest einer der Kontaktbereiche (11,12,13) Kuppen-förmig gebildet ist.

4. Reibeinrichtung (1) nach einem der vorhergehenden Ansprüche, wobei die Eingangsscheiben (5,6) eine derartige vorbestimmte axiale Gesamtnachgiebigkeit (22,23) aufweisen, dass der nutzbare Wegbereich (24,25,26) mittels der Gesamtnachgiebigkeit (22,23) um den Faktor 1,5 bis 3 vergrößert ist.

5. Reibeinrichtung (1) nach Anspruch 4, wobei
das Verhältnis von der maximalen nutzbaren Kraft (39) zu der minimalen nutzbaren Kraft (38) größer 1,5 oder größer 2 ist.

6. Reibeinrichtung (1) nach einem der vorhergehenden Ansprüche, wobei zumindest eine der Eingangsscheiben (5) Sektorausbrüche (40) und Radialstege (41) zwischen den Sektorausbrüchen (40) aufweist,
wobei von den Radialstegen (41) die Gegenreibfläche (42) für die Reibzonen (14,15) der korrespondierenden Reibscheibe (9) gebildet ist, und wobei die Radialstege (41) eine Stegnachgiebigkeit aufweisen, von welchen ein Hauptanteil einer vorbestimmten Gesamtnachgiebigkeit (22,23) gebildet ist, wobei bevorzugt die Stegnachgiebigkeit abhängig von dem wirksam anliegenden Durchmesser (28,30) der korrespondierenden Reibzone (14,15) veränderlich ist.

7. Reibeinrichtung (1) nach einem der vorhergehenden Ansprüche, wobei die Reibscheiben (9,10) jeweils über in Umlaufrichtung wirksame Einhängungen (44,45) der Reibscheiben (9,10) drehmomentübertragend verbunden sind:
- mit einem separaten Anschlusselement, welches zum drehmomentübertragenden Verbinden mit der Ausgangsseite (7) eingerichtet ist, und/oder
- miteinander.

8. Reibeinrichtung (1) nach einem der vorhergehenden Ansprüche, wobei das Energiespeicherelement (8) über in Umlaufrichtung wirksame Einhängungen (46,47) des Energiespeicherelements (8) mit einer der Reibscheiben (10) drehmomentübertragend verbunden ist.

9. Torsionsschwingungsdämpfer (3) für einen Antriebsstrang (48), aufweisend ein Eingangselement (49) und ein Ausgangselement (50), sowie eine Reibeinrichtung (1) nach einem der vorhergehenden Ansprüche,
wobei das Eingangselement (49) mittels der Reibeinrichtung (1) mit dem Ausgangselement (50) dissipativ gedämpft drehmomentübertragend verbunden ist,
wobei bevorzugt der Torsionsschwingungsdämpfer (3) als Pendelwippendämpfer (51) ausgeführt ist.

10. Antriebsstrang (48), aufweisend zumindest die folgenden Komponenten:
- zumindest eine Antriebsmaschine (52,53) mit einer Maschinenwelle (54,55);
- ein Getriebe (56) zum Übertragen eines Drehmoments der zumindest einen Maschinenwelle (54,55) an zumindest einen Verbraucher (57,58); und
- einen Torsionsschwingungsdämpfer (3) nach Anspruch 9, wobei die zumindest eine Antriebsmaschine (52,53) und der zumindest eine Verbraucher (57,58) mittels des Torsionsschwingungsdämpfers (3) gegen Torsionsschwingungen gedämpft drehmomentübertragend verbunden sind.

## Claims

1. A friction device (1) having a rotational axis (2) for a torsional vibration damper (3), having at least the following components:
- an input side (4) having a first input disk (5) and having a second input disk (6), which are connected to each other; and
- an output side (7) having an energy storage element (8), a first friction disk (9) and a second friction disk (10), wherein the energy storage element (8) is arranged axially between the friction disks (9, 10), wherein the friction disks (9, 10) have a plurality of contact areas (11, 12, 13) on the energy storage element side and a plurality of friction zones (14, 15, 16) on the input disk side,
wherein a torque can be transmitted frictionally between the input side (4) and the output side (7) by prestressing the energy storage element (8) to exert an axial force (17, 18, 19) and this axial force (17, 18, 19) is conducted via:
- at least one of the contact areas (11, 12, 13) from the energy storage element (8) to the respective friction disk (9, 10), and
- at least one of the friction zones (14, 15, 16) of the friction disks (9, 10) on the respectively corresponding input disk (5, 6), wherein a relative angle of rotation (20, 21) about the rotational axis (2) can be effected between the output side (7) and the input side (4) as a result of a torque gradient, and
is dependant on the applied angle of rotation (20, 21):
- an amount of axial force (17, 18, 19), and
- the contact area (11, 12, 13) and/or the friction zone (14, 15, 16) over which the axial force (17, 18, 19) is conducted,
wherein a first of the contact areas (11) and a first of the friction zones (14) are each arranged on a first diameter (27, 28), and a second of the contact areas (12) and a second of the friction zones (15) are each arranged on a second diameter (29, 30), wherein at least one of the first diameters (27, 28) is not equal to the respective second diameter (29, 30) on the same side,
**characterised in that**
a first axial distance (33) between the first contact region (11) and the first friction zone (14) is not equal to a second axial distance (34) between the second contact region (12) and the second friction zone (15).

2. The friction device (1) according to claim 1, wherein
the first friction zone (14) and the second friction zone (15) merge into one another in a ramplike manner in the circumferential and radial directions.

3. The friction device (1) according to claim 1 or 2, wherein
the first contact region (11) and the second contact region (12) protrude from the surface (35) of the respective friction disk (9) facing the energy storage element (8), with a different height (36, 37) from each other,
wherein preferably at least one of the contact regions (11, 12, 13) is dome-shaped.

4. The friction device (1) according to one of the preceding claims, wherein
the input disks (5, 6) have such a predetermined axial total flexibility (22, 23) that the usable travel range (24, 25, 26) is increased by a factor of 1.5 to 3 by means of the total flexibility (22, 23).

5. The friction device (1) according to claim 4, wherein
the ratio of the maximum usable force (39) to the minimum usable force (38) is greater than 1.5 or greater than 2.

6. The friction device (1) according to one of the preceding claims, wherein
at least one of the input disks (5) has sector perforations (40) and radial webs (41) between the sector perforations (40),
wherein the radial webs (41) form the counter friction surface (42) for the friction zones (14, 15) of the corresponding friction disk (9), and
wherein the radial webs (41) have a web flexibility, of which a major portion of a predetermined total flexibility (22,23) is formed,
wherein the web flexibility is preferably variable depending on the effectively adjacent diameter (28, 30) of the corresponding friction zone (14, 15).

7. The friction device (1) according to one of the preceding claims, wherein
the friction disks (9, 10) are each connected in a torque-transmitting manner via mounts (44, 45) of the friction disks (9, 10) which are effective in the direction of rotation:
- with a separate connection element which is designed for torque-transmitting connection to the output side (7), and/or
- to each other.

8. The friction device (1) according to one of the preceding claims, wherein
the energy storage element (8) is connected to one of the friction disks (10) in a torque-transmitting manner via mounts (46, 47) of the energy storage element (8) which are effective in the direction of rotation.

9. A torsional vibration damper (3) for a drive train (48), comprising an input element (49) and an output element (50), and a friction device (1) according to one of the preceding claims,
wherein the input element (49) is connected to the output element (50) in a dissipatively damped torque-transmitting manner by means of the friction device (1),
wherein the torsional vibration damper (3) is preferably designed as a pendulum rocker damper (51).

10. A drive train (48), having at least the following components:
- at least one drive machine (52, 53) having a machine shaft (54, 55);
- a transmission (56) for transmitting a torque of the at least one machine shaft (54, 55) to at least one consumer (57, 58); and
- a torsional vibration damper (3) according to claim 9,
wherein the at least one drive machine (52, 53) and the at least one consumer (57, 58) are connected, in a damped torque-transmitting manner, against torsional vibrations by means of the torsional vibration damper (3).

## Revendications

1. Dispositif de frottement (1) doté d'un axe de rotation (2) destiné à un amortisseur de vibrations de torsion (3), présentant au moins les composants suivants :
- un côté entrée (4) comportant un premier disque d'entrée (5) et comportant un second disque d'entrée (6), qui sont reliés l'un à l'autre ; et
- un côté sortie (7) comportant un élément accumulateur d'énergie (8), un premier disque de frottement (9) et un second disque de frottement (10), dans lequel l'élément accumulateur d'énergie (8) est agencé axialement entre les disques de frottement (9, 10), dans lequel les disques de frottement (9, 10) comprennent une pluralité de zones de contact (11, 12, 13) du côté de l'élément accumulateur d'énergie et une pluralité de zones de frottement (14, 15, 16) du côté du disque d'entrée,
dans lequel un couple peut être transmis par frottement entre le côté entrée (4) et le côté sortie (7) en ce que l'élément accumulateur d'énergie (8) est précontraint pour exercer une force axiale (17, 18, 19) et cette force axiale (17 ,18,19) est guidée par l'intermédiaire de :
- respectivement au moins une des zones de contact (11, 12, 13) de l'élément accumulateur d'énergie (8) au disque de frottement (9, 10) respectif, ainsi que
- respectivement au moins une des zones de frottement (14, 15, 16) des disques de frottement (9, 10) au disque d'entrée (5, 6) correspondant respectif, dans lequel une différence de couple provoque un angle de torsion relatif (20, 21) autour de l'axe de rotation (2) entre le côté sortie (7) et le côté entrée (4), et
dépend de l'angle de torsion (20, 21) appliqué :
- une quantité d'une force axiale (17, 18, 19), et
- la zone de contact (11, 12, 13) et/ou la zone de frottement (14, 15, 16), par l'intermédiaire de laquelle est guidée la force axiale (17, 18, 19),
dans lequel une première des zones de contact (11) et une première des zones de frottement (14) sont agencées respectivement sur un premier diamètre (27, 28), et une seconde des zones de contact (12) et une seconde des zones de frottement (15) respectivement sur un second diamètre (29, 30), dans lequel au moins un des premiers diamètres (27, 28) étant différent du second diamètre (29, 30) respectif du même côté,
**caractérisé en ce que**
une première distance axiale (33) entre la première zone de contact (11) et la première zone de frottement (14) est différente d'une seconde distance axiale (34) entre la seconde zone de contact (12) et la seconde zone de frottement (15).

2. Dispositif de frottement (1) selon la revendication 1, dans lequel
la première zone de frottement (14) et la seconde zone de frottement (15) se fondent l'une dans l'autre en forme de rampe dans la direction circonférentielle et dans la direction radiale.

3. Dispositif de frottement (1) selon la revendication 1 ou 2, dans lequel
la première zone de contact (11) et la seconde zone de contact (12) dépassent de la surface (35) du disque de frottement (9) concerné faisant face à l'élément accumulateur d'énergie (8) avec une hauteur (36, 37) différente l'une de l'autre,
dans lequel de préférence au moins une des zones de contact (11, 12, 13) est conçue sous la forme d'un dôme.

4. Dispositif de frottement (1) selon l'une quelconque des revendications précédentes, dans lequel
les disques d'entrée (5, 6) présentent une flexibilité totale (22, 23) axiale prédéterminée telle que la plage de déplacement utile (24, 25, 26) est augmentée d'un facteur de 1,5 à 3 au moyen de la flexibilité totale (22, 23).

5. Dispositif de frottement (1) selon la revendication 4, dans lequel
le rapport entre la force utile maximale (39) et la force utile minimale (38) est supérieur à 1,5 ou supérieur à 2.

6. Dispositif de frottement (1) selon l'une quelconque des revendications précédentes, dans lequel
au moins un des disques d'entrée (5) présente des découpes sectorielles (40) et des ponts radiaux (41) entre les découpes sectorielles (40),
dans lequel la surface de contre-frottement (42) pour les zones de frottement (14, 15) du disque de frottement (9) correspondant est conçue par les ponts radiaux (41), et
dans lequel les ponts radiaux (41) présentent une flexibilité de pont qui constitue une partie majeure d'une flexibilité totale (22, 23) prédéterminée,
dans lequel la flexibilité de pont est de préférence variable en fonction du diamètre effectif (28,30) de la zone de frottement (14,15) correspondante.

7. Dispositif de frottement (1) selon l'une quelconque des revendications précédentes, dans lequel
les disques de frottement (9, 10) sont reliés respectivement de manière à transmettre le couple par l'intermédiaire d'éléments d'accrochage (44, 45) des disques de frottement (9, 10) agissant dans le sens circonférentiel :
- avec un élément de liaison séparé, qui est conçu pour une liaison transmettant le couple au côté sortie (7), et/ou
- l'un à l'autre.

8. Dispositif de frottement (1) selon l'une quelconque des revendications précédentes, dans lequel
l'élément accumulateur d'énergie (8) est relié de manière à transmettre le couple à l'un des disques de frottement (10) par l'intermédiaire d'éléments d'accrochage (46, 47) de l'élément accumulateur d'énergie (8) agissant dans le sens circonférentiel.

9. Amortisseur de vibrations de torsion (3) pour une chaîne cinématique (48), présentant un élément d'entrée (49) et un élément de sortie (50), ainsi qu'un dispositif de frottement (1) selon l'une quelconque des revendications précédentes,
dans lequel l'élément d'entrée (49) est relié à l'élément de sortie (50) de manière à transmettre le couple avec amortissement dissipatif au moyen du dispositif de frottement (1),
dans lequel l'amortisseur de vibrations de torsion (3) est de préférence réalisé sous la forme d'un amortisseur à bascule pendulaire (51).

10. Chaîne cinématique (48) présentant au moins les composants suivants :
- au moins une machine d'entraînement (52, 53) doté d'un arbre de machine (54, 55) ;
- une boîte de vitesse (56) pour transmettre un couple de l'au moins un arbre de machine (54, 55) à au moins un consommateur (57, 58) ; et
- un amortisseur de vibrations de torsion (3) selon la revendication 9,
dans lequel l'au moins une machine d'entraînement (52, 53) et l'au moins un consommateur (57, 58) sont reliés de manière à transmettre le couple avec amortissement de vibrations de torsion au moyen de l'amortisseur de vibrations de torsion (3).
